# FASCICULE DE BREVET EUROPEEN

(11) **EP 3 000 209 B1**
(45) Date de publication et mention de la délivrance du brevet: **09.05.2018**
(21) Numéro de dépôt: 14731709.3
(22) Date de dépôt: 22.05.2014
(51) Int. Cl.: H04L 29/08, H04B 7/155, H04L 12/28, H04L 12/66, H04W 40/04, H04L 12/803

(54) **TECHNIQUE D'ACHEMINEMENT DE PAQUETS**
TECHNIK ZUR WEITERLEITUNG VON PAKETEN
TECHNIQUE FOR FORWARDING PACKETS

(30) Priorité: 23.05.2013 FR 1354646
(43) Date de publication de la demande: 30.03.2016
(73) Titulaire: Orange, 75015 Paris (FR)
(72) Inventeur: OULAHAL, Nordine, 38100 Grenoble (FR); ROUBAUD, Xavier, 38330 Montbonnot Saint Martin (FR)
(86) Numéro de dépôt international: PCT/FR2014/051207
(87) Numéro de publication internationale: WO 2014/188134

(56) Documents cités:
- WO-A1-2006/119573
- US-A1- 2003 031 180
- US-A1- 2008 049 781

## Description

L'invention se situe dans le domaine de l'interconnexion entre un réseau local et un réseau de communication. Plus précisément, l'invention concerne une technique d'acheminement de paquets de données par un dispositif passerelle, apte à assurer cette interconnexion.

Une entité d'un réseau local (LAN, pour « Local Area Network) accède à un réseau de communication étendu (WAN, pour « Wide Area Network »), tel que le réseau Internet, par l'intermédiaire d'un dispositif passerelle. Le dispositif passerelle a comme rôle principal d'établir et de gérer une connexion vers le réseau de communication étendu, et de convertir un flux reçu du réseau de communication étendu dans un protocole utilisable par les entités du réseau local et réciproquement. Ce dispositif passerelle correspond par exemple à une passerelle résidentielle, à un dispositif de routage,... A titre d'exemple non limitatif, l'interface vers le réseau de communication étendu est de type ADSL pour « Asymmetric Digital Subscriber Line », câble ou fibre optique, et l'interface vers le réseau local est de type WiFi pour « Wireless Fidelity » ou bien encore Ethernet. Cette interface vers le réseau local permet au dispositif passerelle de communiquer avec les entités du réseau local. Lorsqu'une des entités du réseau local télécharge un contenu de volume important, tel qu'un contenu vidéo, les autres entités du réseau local subissent une diminution des performance. Un exemple d'interconnexion entre un réseau local et un réseau de communication, utilisant un dispositif passerelle, est décrit dans le document WO2006/119573.

Un des buts de l'invention est de remédier à des insuffisances/inconvénients de l'état de la technique et/ou d'y apporter des améliorations.

Selon un premier aspect, l'invention a pour objet un procédé d'acheminement de paquets de données par un dispositif passerelle, le dispositif passerelle étant apte à acheminer des paquets reçus d'une entité cliente d'un réseau local vers un réseau de communication au moyen d'une interface nominale et réciproquement, le dispositif passerelle comprenant en outre une deuxième interface sans fil. Le procédé comprend les étapes suivantes mises en oeuvre par le dispositif passerelle :
- identification d'au moins un dispositif, dit dispositif relais, accessible au moyen de la deuxième interface et apte à jouer un rôle de relais pour acheminer des paquets échangés entre une entité cliente et le réseau de communication ;
- réception en provenance d'une entité cliente d'un paquet de données indiquant qu'une session est initiée ;
- lorsqu'un critère de sélection d'acheminement est vérifié, acheminement des paquets relatifs à ladite session au moyen de la deuxième interface par l'intermédiaire du dispositif relais ;
- lorsque ledit critère de sélection n'est pas vérifié, acheminement des paquets relatifs à ladite session au moyen de l'interface nominale.

Ainsi, grâce au procédé d'acheminement, il est possible pour le dispositif passerelle d'utiliser des ressources supplémentaires offertes par des dispositifs relais pour la connexion des entités clientes du réseau local au réseau de communication. Ceci permet d'offrir un service aux entités clientes du réseau local de meilleure qualité.

Les entités clientes correspondent par exemple à des ordinateurs personnels, à des terminaux mobiles, ...

Les dispositifs relais correspondent par exemple à un autre dispositif passerelle d'un réseau local voisin (par exemple à un « Hot spot » WiFi public d'un commerçant, d'une collectivité, un WiFi communautaire d'un particulier,..), à un point d'accès sans fil WiFi d'un opérateur, à un terminal mobile disposant d'un accès à un service de données

On appelle interface nominale l'interface par l'intermédiaire de laquelle le dispositif passerelle interconnecte le réseau local et le réseau de communication. Il s'agit par exemple d'une interface de type ADSL, d'une interface de type fibre optique, ... La deuxième interface correspond par exemple à une interface sans fil de type WiFi. Il peut y avoir un ou plusieurs dispositifs relais accessibles au moyen de la deuxième interface. Les dispositifs passerelles connus de l'état de la technique utilisent cette deuxième interface pour communiquer avec certaines entités clientes du réseau local. Dans cette technique d'acheminements de paquets de données, les dispositifs passerelles l'utilisent pour communiquer avec des dispositifs relais afin d'acheminer des paquets de données à destination des entités clientes du réseau local et en provenance du réseau de communication et réciproquement.

Le critère de sélection permet de choisir une des interfaces disponibles pour acheminer les paquets, l'interface nominale ou bien la deuxième interface. La capacité disponible au niveau du dispositif passerelle pour acheminer des paquets est ainsi augmentée.

Le dispositif passerelle peut également disposer d'autres interfaces, de même type ou bien de types différents.

On souligne ici que le dispositif passerelle offre vu des entités clientes une unique connectivité vers le réseau de communication. Aucune modification n'est nécessaire au niveau des entités clientes. Le procédé d'acheminement est entièrement transparent pour celles-ci.

Il est ainsi possible aux utilisateurs du réseau local de disposer de manière transitoire d'un débit supérieur à celui qui peut être acheminé au moyen de l'interface nominale.

Dans un mode de réalisation particulier, le critère de sélection d'acheminement prend également en compte la disponibilité ou non de l'interface nominale. Ainsi, en cas de défaillance ponctuelle de l'interface nominale, le service de connexion au réseau de communication est offert aux utilisateurs du réseau local.

Le service offert aux utilisateurs du réseau local présente ainsi une qualité de service améliorée.

Les différents modes ou caractéristiques de réalisation mentionnés ci-après peuvent être ajoutés indépendamment ou en combinaison les uns avec les autres, aux étapes du procédé d'acheminement tel que défini précédemment.

Selon une caractéristique particulière du procédé, le critère de sélection appartient au groupe comprenant au moins un critère temporel, un critère de charge, un critère relatif à un service auquel la session est associée.

Le critère temporel correspond par exemple à des heures pendant lesquelles il est possible d'acheminer une partie des paquets au moyen de la deuxième interface. A titre d'exemple non limitatif, à certaines heures de la journée, un dispositif relais n'est pas utilisé en tant que relais car il est déjà chargé à ces heures ou susceptible de l'être.

Lorsque l'interface nominale ne peut prendre en charge une nouvelle session en raison d'une charge excessive, la nouvelle session peut être acheminée vers un dispositif relais au moyen de la deuxième interface. Il est ainsi possible d'offrir un service à l'entité cliente même lorsque l'interface nominale est surchargée.

Il est également possible d'acheminer les paquets de certaines sessions en fonction du service associé. Des téléchargements de fichier peuvent par exemple s'effectuer au moyen de la deuxième interface, afin de laisser de la capacité à des applications temps réel acheminées au moyen de l'interface nominale.

Selon une caractéristique particulière du procédé, un débit mis à disposition du dispositif passerelle par le dispositif relais identifié est obtenu.

La prise en compte du débit mis à disposition par le dispositif relais permet ainsi de sélectionner plus finement le dispositif relais à utiliser.

Avantageusement, le procédé comprend une négociation relative à une utilisation du dispositif relais pour acheminer des paquets dans la limite du débit mis à disposition.

Dans une étape initiale, le dispositif passerelle négocie avec le dispositif relais quel est le débit mis à disposition. Le dispositif relais peut ainsi fixer une limite à son utilisation par le dispositif passerelle.

Avantageusement, le dispositif passerelle, mémorisant un débit courant acheminé par l'intermédiaire du dispositif relais, achemine les paquets relatifs à ladite session au moyen de l'interface nominale lorsqu'un débit disponible pour un acheminement par l'intermédiaire du dispositif relais ne permet pas d'acheminer les paquets relatifs à la session.

Le dispositif passerelle mémorise pour chaque dispositif relais un débit courant acheminé par son intermédiaire et supervise à cet effet également les fermetures de session. Ceci permet au dispositif passerelle de choisir l'interface la plus adaptée à l'acheminement de la session.

Selon un deuxième aspect, l'invention concerne également un dispositif passerelle, agencé pour acheminer des paquets de données reçus d'une entité cliente d'un réseau local vers un réseau de communication au moyen d'une interface nominale et réciproquement, comprenant en outre ;
- au moins une deuxième interface sans fil ;
- un module d'identification d'au moins un dispositif, dit dispositif relais, accessible au moyen de la deuxième interface et apte à jouer un rôle de relais pour acheminer des paquets échangés entre une entité cliente et le réseau de communication ;
- un module de réception, agencé pour recevoir en provenance d'une entité cliente un paquet de données indiquant qu'une session est initiée ;
- un module d'acheminement des paquets relatifs à ladite session, agencé pour acheminer les paquets au moyen de la deuxième interface par l'intermédiaire du dispositif relais lorsqu'un critère de sélection d'acheminement est vérifié et pour acheminer les paquets au moyen de l'interface nominale lorsque ledit critère de sélection n'est pas vérifié.

Les avantages énoncés pour le procédé selon le premier aspect sont transposables directement au dispositif passerelle.

Selon un troisième aspect, l'invention concerne en outre un système d'acheminement de paquets de données entre des entités clientes d'un réseau local et un réseau de communication, ledit système comprenant un dispositif passerelle selon le deuxième aspect et au moins un dispositif, agencé pour jouer un rôle de dispositif relais dans l'acheminement des paquets entre les entités clientes et le réseau de communication. Le deuxième dispositif est accessible au moyen de la deuxième interface.

Selon un quatrième aspect, l'invention concerne un programme pour un dispositif passerelle, comprenant des instructions de code de programme destinées à commander l'exécution des étapes du procédé d'acheminement précédemment décrit, lorsque ce programme est exécuté par ce dispositif passerelle et un support d'enregistrement lisible par un dispositif passerelle sur lequel est enregistré un programme pour un dispositif passerelle.

Les avantages énoncés pour le procédé d'acheminement selon le premier aspect sont transposables directement au programme pour un dispositif passerelle et au support d'enregistrement.

L'invention sera mieux comprise à l'aide de la description suivante de modes de réalisation particuliers de la technique d'acheminement, en référence aux dessins annexés sur lesquels :
- la figure 1 représente un dispositif passerelle dans son environnement ;
- les figures 2a-2b illustrent des étapes mises en oeuvre par le dispositif passerelle selon un mode particulier de réalisation du procédé d'acheminement ;
- la figure 3 représente un dispositif passerelle selon un mode particulier de l'invention.

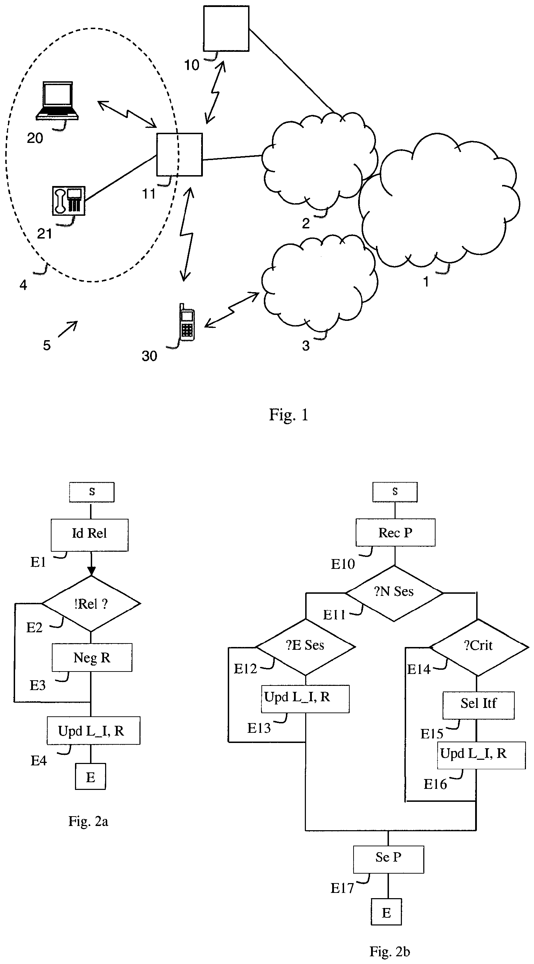

La figure 1 représente un dispositif passerelle 11 dans son environnement. Le dispositif passerelle 11 constitue un point d'entrée unique vers des équipements d'un réseau local 4 LAN (pour « Local Area Network »). Ces équipements sont appelés par la suite entités clientes. Le dispositif passerelle 11 est situé par exemple chez un utilisateur quand il s'agit d'un réseau local privé. Les entités clientes correspondent par exemple à un ordinateur personnel 20, un téléphone 21. Les entités clientes peuvent également correspondre à des téléphones mobiles, des téléphones mobiles intelligents (ou « smartphone »), ... Aucune limitation n'est attachée aux entités clientes, ni à leur nombre. Le dispositif passerelle 11 joue un rôle pour interconnecter le réseau local 4 et un réseau de communication étendu 1 WAN (pour « Wide Area Network ») par l'intermédiaire d'un réseau d'accès 2. Le réseau de communication 1 correspond par exemple au réseau Internet. Plus précisément, le dispositif passerelle 11 est agencé pour acheminer des paquets de données reçus d'une entité cliente 20, 21 vers le réseau de communication 1 au moyen d'une interface nominale et pour recevoir des paquets de données par l'intermédiaire de l'interface nominale à destination de l'entité cliente 20, 21. A titre d'exemple illustratif, l'interface nominale du dispositif passerelle 11 correspond à un accès de type ADSL (pour « Asymmetric Digital Subscriber Line »). Il peut également s'agir d'un accès au moyen d'une fibre optique, d'un câble,... Aucune limitation n'est attachée au type d'accès au moyen de cette interface nominale. Le dispositif passerelle 11 peut constituer un point d'accès partagé entre plusieurs entités clientes appartenant par exemple à une entreprise ou à un collectif d'utilisateurs.

Sur la figure 1, un autre dispositif passerelle 10 est également représenté. Cet autre dispositif passerelle permet à des entités clientes d'un autre réseau local (non représentées sur la figure 1) d'accéder au réseau de communication 1 par l'intermédiaire du réseau d'accès 2. Ce dispositif passerelle 10 comprend une interface de type WiFi (pour « Wireless Fidelity ») lui permettant de communiquer avec les entités clientes de son réseau local. Le dispositif passerelle 10 met également à la disposition d'utilisateurs autres que ceux de son réseau local une partie de sa capacité disponible sur son interface WiFi. Cette mise à disposition est connue sous l'appellation de service de type WiFi communautaire. Le dispositif passerelle 10 joue alors un rôle de dispositif relais vers le réseau de communication 1. Un seul dispositif passerelle proposant ce service est représenté pour ne pas surcharger la figure 1. Le dispositif passerelle 10 peut également correspondre à un point d'accès WiFi ou « hot spot » WiFi. Aucune limitation n'est par ailleurs attachée au nombre de dispositifs passerelles jouant le rôle de dispositif relais.

Un terminal mobile 30 est également représenté sur la figure 1 et permet à son utilisateur d'accéder au réseau de communication 1 au moyen d'une interface sans fil par l'intermédiaire d'un réseau mobile 3. Le réseau mobile 3 est par exemple un réseau dit de troisième génération 3G conforme aux spécifications définies par l'organisme de normalisation 3GPP (pour « Third Generation Partnership Project »). Dans le mode de réalisation décrit, le terminal mobile 30 dispose également d'une interface de type WiFi. Le terminal mobile 30 met également à disposition d'utilisateurs autres une partie de sa capacité disponible sur son interface radio vers le réseau mobile 3 en jouant un rôle de point d'accès WiFi vers le réseau de communication 1. Le terminal mobile 30 est ainsi un dispositif relais vers le réseau de communication. Plus précisément, le terminal mobile 30 est configuré en tant que modulateur/démodulateur 3G, appelé modem 3G. Un seul terminal mobile jouant le rôle de dispositif relais est représenté sur la figure 1. Aucune limitation n'est attachée au nombre de terminaux mobiles jouant ce rôle. On souligne ici que le terminal mobile 30 peut appartenir ou non à un utilisateur d'une entité cliente du réseau local 4.

Le dispositif passerelle 11 dispose également d'une deuxième interface, par exemple de type WiFi. Cette deuxième interface est utilisée pour communiquer avec certaines des entités clientes du réseau local 4. Dans un mode de réalisation particulier, le dispositif passerelle 11 utilise cette deuxième interface pour communiquer avec des dispositifs relais, tels que le dispositif passerelle 10, le terminal mobile 30, notamment pour acheminer des paquets en provenance des entités clientes du réseau local 4 à destination du réseau de communication 1 et pour recevoir des paquets en provenance du réseau de communication 1 à destination des entités clientes du réseau local 4. Plus précisément, les paquets de certaines sessions entre les entités clientes du réseau local 4 et le réseau de communication 1 transitent par l'intermédiaire d'un dispositif relais.

Nous allons maintenant décrire le procédé d'acheminement, tel qu'il est mis en oeuvre par le dispositif passerelle 11 dans un mode particulier de réalisation, en relation avec les figures 2a et 2b.

La figure 2a représente des étapes mises en oeuvre par le dispositif passerelle 11 pour établir une liste de dispositifs relais, c'est-à-dire une liste d'au moins un dispositif apte à jouer un rôle de relais pour acheminer des paquets échangés entre une entité cliente du réseau local 4 et le réseau de communication 1.

Dans une étape E1, le dispositif passerelle 11 détermine si des équipements sont accessibles au moyen de sa deuxième interface, c'est-à-dire sont situés dans sa zone de couverture radio. Puis, toujours dans cette étape E1, le dispositif passerelle 11 détermine si ces équipements accessibles sont aptes à jouer un rôle de relais vers le réseau de communication 1. Pour le dispositif passerelle 10, il s'agit d'une offre de service communautaire. Par cette offre de service, le dispositif passerelle 10 indique qu'il met à disposition une partie de sa capacité vers le réseau de communication 1. Pour le terminal mobile 30, il s'agit d'une offre de service en tant que modem de troisième génération 3G ou de quatrième génération 4G/LTE (pour « Long Term Evolution »). Le terminal mobile 30 est, configuré pour être accessible à un ensemble de dispositifs, dont le dispositif passerelle 11.

Dans une étape E2, le dispositif passerelle 11 vérifie si au moins un dispositif relais 10, 30 a été déterminé. Si tel est le cas, dans une étape E3, le dispositif passerelle 11 obtient un débit R mis à disposition par le dispositif relais.

Dans un mode de réalisation particulier, pour obtenir le débit R mis à disposition, le dispositif passerelle 11 négocie avec le dispositif relais une utilisation de ce dernier pour acheminer des paquets dans la limite du débit R mis à disposition. A titre d'exemple non limitatif, le dispositif passerelle 11 transmet une demande d'utilisation d'un débit D au dispositif relais et ce dernier répond en transmettant un débit négocié R et le cas échéant des conditions d'utilisation du débit mis à disposition. Les conditions d'utilisation correspondent par exemple à des intervalles temporels de mise à disposition, des conditions de compensation, un seuil maximal de données,...

Cette étape E3 est réitérée, le cas échéant, pour l'ensemble des dispositifs relais identifiés à l'étape E1.

Dans une étape E4, le dispositif passerelle 11 met à jour une liste de dispositifs relais disponibles. Dans un mode de réalisation particulier, le dispositif passerelle 11 associe également à chaque dispositif relais identifié le débit R mis à disposition. Un dispositif qui avait été identifié lors d'une exécution précédente des étapes E1 à E4 comme dispositif relais et qui ne se trouve plus dans la zone de couverture du dispositif passerelle 11 est supprimé de la liste de dispositifs relais au cours de cette étape E4.

Cet ensemble d'étapes E1 à E4 peut être exécuté de manière régulière, ou bien son exécution être commandée lorsqu'un dispositif relais de la liste n'est pas joignable. Un dispositif relais devient injoignable par exemple lorsqu'une panne survient sur ce dispositif ou bien lorsqu'il ne situe plus dans la zone de couverture du dispositif passerelle 11. Aucune limitation n'est attachée aux conditions de déclenchement de l'exécution de ces étapes E1 à E4, visant à établir une liste d'au moins un dispositif apte à jouer un rôle de relais pour acheminer des paquets échangés entre une entité cliente du réseau local et le réseau de communication.

La figure 2b représente des étapes mises en oeuvre par le dispositif passerelle 11 pour acheminer un paquet de données échangé entre une entité cliente 20, 21 du réseau local 4 et le réseau de communication 1, plus précisément de l'entité cliente vers le réseau de communication 1.

Dans une étape E10, le dispositif passerelle 11 reçoit en provenance de l'entité cliente 20, 21 un paquet de données P à acheminer à destination du réseau de communication 1.

Dans une étape E11, le dispositif passerelle 11 détermine si le paquet P indique qu'une session est initiée. Plus précisément, le paquet P porte une information relative à un établissement d'une nouvelle session.

Si tel est le cas, dans une étape E14, le dispositif passerelle 11 vérifie qu'un critère de sélection d'acheminement est vérifié.

Un critère de sélection d'acheminement correspond par exemple à un critère temporel, un critère de charge, un critère relatif à un service auquel la session est associée. Le critère de sélection d'acheminement peut également correspondre à une combinaison de ces différents critères. Il ne s'agit pas d'une liste exhaustive de critères de sélection d'acheminement.

Le critère temporel correspond par exemple à des heures pendant lesquelles il est possible d'acheminer une partie des paquets par l'intermédiaire d'un dispositif relais 10, 30 au moyen de la deuxième interface. A titre d'exemple non limitatif, à certaines heures de la journée, le terminal mobile 30 n'est pas utilisé car sa capacité d'acheminement est en général limitée sur ces heures. Cette condition d'utilisation peut avoir été obtenue lors de la négociation à l'étape E3.

Le critère de charge correspond par exemple à une règle d'acheminement en fonction de la charge de l'interface nominale du dispositif passerelle 11. Lorsque cette interface présente un taux de charge supérieur à un seuil, la nouvelle session peut être acheminée vers un dispositif relais 10, 30 au moyen de la deuxième interface. Il est ainsi possible d'offrir un service à l'entité cliente même lorsque l'interface nominale est surchargée. Toujours à titre d'exemple, le critère de charge peut correspondre à une règle de partage de charge entre les interfaces disponibles au niveau du dispositif passerelle 11. Ceci permet d'équilibrer la charge entre les différentes interfaces.

Le critère relatif à un service auquel la session est associée permet de définir des services pour lesquels l'acheminement va être effectué de manière préférentielle au moyen de la deuxième interface. Un service de téléchargement de fichier peut par exemple être exécuté au moyen de la deuxième interface, afin de ne pas charger l'interface nominale et de laisser ainsi de la capacité de l'interface nominale pour des applications temps réel.

Si à l'étape E14, le critère de sélection d'acheminement est vérifié, dans une étape E15, le dispositif passerelle 11 sélectionne un dispositif relais 10, 30 accessible au moyen de sa deuxième interface (ou d'une de ses deuxièmes interfaces) par l'intermédiaire de laquelle les paquets relatifs à cette nouvelle session vont être acheminés. La deuxième interface correspond alors à l'interface sélectionnée. Les paquets sont alors acheminés par l'intermédiaire du dispositif relais 10, 30.

Dans une étape E16, le cas échéant, le dispositif passerelle 11 met à jour la liste de dispositifs relais disponibles en y mémorisant l'acheminement de la nouvelle session par l'intermédiaire du dispositif relais.

Si à l'étape E14, le critère de sélection d'acheminement n'est pas vérifié, l'interface sélectionnée reste l'interface par défaut, c'est-à-dire l'interface nominale.

Dans les deux cas, dans une étape E17, le dispositif passerelle 11 achemine les paquets relatifs à cette session au moyen de l'interface sélectionnée, dont le paquet P en cours de traitement. Lorsque le critère de sélection n'est pas vérifié, les paquets sont acheminés au moyen de l'interface nominale. Lorsque la deuxième interface a été sélectionnée, l'acheminement s'effectue par l'intermédiaire d'un dispositif relais.

Le dispositif passerelle 11 repasse ensuite en attente de réception d'un nouveau paquet à acheminer.

Lorsque, à l'étape E11, le dispositif passerelle 11 a déterminé que le paquet P n'est pas le premier paquet relatif à la session, dans une étape E12, le dispositif passerelle 11 vérifie si le paquet P indique que la session est en cours de fermeture.

Si tel est le cas, dans une étape E13, le dispositif passerelle 11 met à jour la liste de dispositifs relais disponibles en y supprimant l'information relative à un acheminement de la session par l'intermédiaire du dispositif relais.

Dans les deux cas, c'est-à-dire si le paquet indique ou non que la session est en cours de fermeture, le dispositif passerelle 11 met en oeuvre l'étape E17 d'acheminement du paquet P précédemment décrite. Le dispositif passerelle 11 repasse ensuite en attente de réception d'un nouveau paquet à acheminer.

On constate ainsi qu'une fois une interface d'acheminement sélectionnée, l'ensemble des paquets relatifs à la session est acheminé vers le réseau de communication 1 par la même route. La mise en oeuvre du procédé d'acheminement est en outre complétement transparente pour les entités clientes. Aucune modification n'est nécessaire pour les dispositifs du réseau local 4. Il est ainsi possible aux utilisateurs du réseau local 4 de disposer de manière transitoire d'un débit supérieur à celui acheminé au moyen de l'interface nominale.

Dans un mode de réalisation particulier, le critère de sélection d'acheminement prend également en compte la disponibilité ou non de l'interface nominale. Ainsi, en cas de défaillance ponctuelle de l'interface nominale, le service de connexion au réseau de communication 1 est offert aux utilisateurs du réseau local 4.

On constate également que lorsqu'un des dispositifs relais disparait de la liste de dispositifs relais disponibles, un autre dispositif relais peut être utilisé. Le service offert aux utilisateurs du réseau local 4 présente une qualité de service améliorée.

Dans un mode de réalisation particulier, aux étapes E13 et E16 de mise à jour de la liste de dispositifs relais disponibles, le dispositif passerelle 11 mémorise un débit courant acheminé par l'intermédiaire du dispositif relais. Dans ce cas, à l'étape E14, le dispositif passerelle 11 prend également en compte ce débit courant pour vérifier le critère de sélection d'acheminement. Ainsi, lorsque le critère de sélection est vérifié, les paquets relatifs à la nouvelle session sont acheminés au moyen de l'interface nominale lorsque le débit restant disponible pour un acheminement par l'intermédiaire du dispositif relais, c'est-à-dire le débit mis à disposition diminué du débit courant, ne suffit pas pour acheminer la nouvelle session.

D'autres modes de réalisation sont également envisageables tout en restant dans le cadre du procédé d'acheminement précédemment décrit.

On souligne ici que les paquets relatifs à une session transmis du réseau de communication 1 vers l'entité cliente empruntent le même chemin par l'intermédiaire du dispositif relais. Le procédé d'acheminement mis en oeuvre par le dispositif passerelle 11 pour acheminer un paquet échangé du réseau de communication 1 vers une entité cliente n'est pas décrit plus précisément, le dispositif passerelle 11 mettant en oeuvre une fonction d'acheminement des paquets à destination de l'entité cliente connue de l'état de la technique.

Le fonctionnement du procédé d'acheminement est illustré à l'aide d'un exemple. Le dispositif passerelle 11 est connecté au réseau de communication 1 par une liaison ADSL de débit F. Un utilisateur du réseau local 4 dispose du terminal mobile 30 disposant de deux interfaces, l'une de type WiFi et l'autre de type 3G. Un débit M1 peut être acheminé sur l'interface de type 3G vers le réseau de communication 1 et réciproquement. Un autre utilisateur du réseau local dispose d'un autre terminal mobile (non représenté sur la figure 1) disposant également de deux interfaces, l'une de type WiFi et l'autre de type 3G. Un débit M2 peut être acheminé sur l'interface de type 3G vers le réseau de communication 1 et réciproquement. Le deuxième dispositif passerelle 10 met à disposition un débit C au service de WiFi communautaire pour une connexion vers le réseau de communication 1. Par l'intermédiaire de l'interface de type WiFi, le dispositif passerelle 11 peut ainsi acheminer des paquets de données vers le deuxième dispositif passerelle 10 et les deux terminaux mobiles. Ces trois dispositifs jouent le rôle de dispositifs relais dans la connexion du dispositif passerelle 11 au réseau de communication 1. On suppose que la somme des débits M1, M2 et C ne dépasse pas le débit disponible sur l'interface de type WiFi. Grâce au procédé d'acheminement, le dispositif passerelle 11 peut offrir aux entités clientes du réseau local 4 un débit voisin de la somme des débits F, M1, M2 et C.

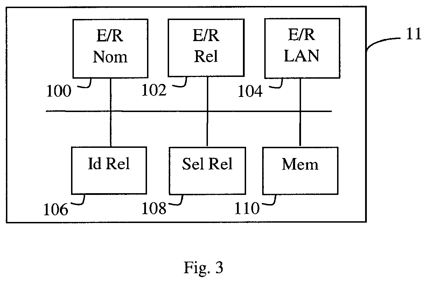

Nous allons maintenant décrire un dispositif passerelle dans un mode particulier de réalisation de l'invention en référence à la figure 3. Un tel dispositif passerelle 11, agencé pour assurer une interconnexion entre un réseau local 4 et un réseau de communication 1, comprend notamment :
- un premier module d'émission/réception 100 au moyen d'une interface nominale ;
- un deuxième module d'émission/réception 102 au moyen d'une deuxième interface ;
- un troisième module d'émission/réception 104, agencé pour communiquer avec les entités clientes dans le réseau local 4 ;
- un module d'identification 106 d'au moins un dispositif, dit dispositif relais, accessible au moyen de la deuxième interface et apte à jouer un rôle de relais pour acheminer des paquets échangés entre une entité cliente et le réseau de communication ;
- un module d'acheminement 108, agencé pour acheminer des paquets relatifs à une session, lorsqu'un critère de sélection d'acheminement est vérifié, au moyen de la deuxième interface par l'intermédiaire du dispositif relais et lorsque le critère de sélection n'est pas vérifié,, au moyen de l'interface nominale ;
- une zone mémoire 110, agencée notamment pour mémoriser une liste de dispositifs relais disponibles.

Le module d'identification 106 est notamment agencé pour mémoriser dans la zone mémoire 110 la liste de dispositifs relais comprenant au moins un dispositif relais identifié. Dans un mode de réalisation particulier, le module d'identification 106 est également agencé pour obtenir un débit R mis à disposition par le dispositif relais et pour mémoriser dans la liste de dispositifs relais le débit R mis à disposition pour le dispositif relais identifié. Dans une variante, le module d'identification 106 est agencé pour négocier avec le dispositif relais une utilisation de ce dernier pour acheminer des paquets dans la limite du débit R mis à disposition.

Le module d'identification 106 est également agencé pour mettre à jour la liste de dispositifs relais disponibles, notamment en supprimant un dispositif qui n'est plus apte à jouer un rôle de relais.

Le troisième module d'émission/réception 104 est notamment agencé pour recevoir en provenance d'une entité cliente un paquet indiquant qu'une session est initiée. Le module d'acheminement 108 est agencé pour vérifier le critère de sélection pour la nouvelle session et le cas échéant, sélectionner la deuxième interface pour acheminer les paquets relatifs à la session initiée par l'intermédiaire d'un dispositif relais. Le module d'acheminement 108 est agencé pour mettre à jour la liste de dispositifs relais dans la zone mémoire 110 en y mémorisant l'acheminement de la nouvelle session par l'intermédiaire du dispositif relais.

Les premier 100, deuxième 102 et troisième 103 modules d'émission/réception sont notamment agencés pour déterminer si un paquet P indique qu'une session est en cours de fermeture. Le module d'acheminement 108 est alors agencé pour mettre à jour la liste de dispositifs relais disponibles dans la zone mémoire 110 en y supprimant l'information relative à un acheminement de la session par l'intermédiaire du dispositif relais.

Dans un mode de réalisation particulier, le module d'acheminement 108 est agencé pour mémoriser un débit courant acheminé par l'intermédiaire d'un dispositif relais dans la liste de dispositifs relais et pour prendre en compte ce débit courant pour vérifier le critère de sélection d'acheminement.

L'invention est mise en oeuvre au moyen de composants logiciels et/ou matériels. Dans cette optique, le terme "module" peut correspondre dans ce document aussi bien à un composant logiciel, qu'à un composant matériel ou à un ensemble de composants matériels et/ou logiciels, apte à mettre en oeuvre une fonction ou un ensemble de fonctions, selon ce qui est décrit précédemment pour le module concerné.

Un composant logiciel correspond à un ou plusieurs programmes d'ordinateur, un ou plusieurs sous-programmes d'un programme, ou de manière plus générale à tout élément d'un programme ou d'un logiciel. Un tel composant logiciel est stocké en mémoire puis chargé et exécuté par un processeur de données d'une entité physique et est susceptible d'accéder aux ressources matérielles de cette entité physique (mémoires, supports d'enregistrement, bus de communication, cartes électroniques d'entrées/sorties, interfaces utilisateur, etc).

De la même manière, un composant matériel correspond à tout élément d'un ensemble matériel (ou hardware). Il peut s'agir d'un composant matériel programmable ou non, avec ou sans processeur intégré pour l'exécution de logiciel. Il s'agit par exemple d'un circuit intégré, d'une carte à puce, d'une carte électronique pour l'exécution d'un micrologiciel (firmware), etc.

Dans un mode de réalisation particulier, les modules 100, 102, 104, 106, 108 sont agencés pour mettre en oeuvre le procédé d'acheminement précédemment décrit. Il s'agit de préférence de modules logiciels comprenant des instructions logicielles pour faire exécuter les étapes du procédé d'acheminement précédemment décrit, mises en oeuvre par un dispositif passerelle. L'invention concerne donc aussi :
- un programme pour un dispositif passerelle, comprenant des instructions de code de programme destinées à commander l'exécution des étapes du procédé d'acheminement précédemment décrit, lorsque ledit programme est exécuté par ledit dispositif passerelle ;
- un support d'enregistrement lisible par un dispositif passerelle sur lequel est enregistré le programme pour un dispositif passerelle.

Les modules logiciels peuvent être stockés dans ou transmis par un support de données. Celui-ci peut être un support matériel de stockage, par exemple un CD-ROM, une disquette magnétique ou un disque dur, ou bien un support de transmission tel qu'un signal électrique, optique ou radio, ou un réseau de télécommunication.

L'invention concerne également un système d'acheminement 5 de paquets de données comprenant un dispositif passerelle 11 tel que décrit précédemment et au moins un dispositif 10, 30, agencé pour jouer un rôle de dispositif relais dans l'acheminement des paquets entre des entités clientes 20, 21 du réseau local 4 et le réseau de communication 1.

## Revendications

1. Procédé d'acheminement de paquets de données par un dispositif passerelle (11), le dispositif passerelle étant apte à acheminer des paquets reçus d'une entité cliente (20, 21) d'un réseau local (4) vers un réseau de communication (1) au moyen d'une interface nominale et réciproquement, le dispositif passerelle comprenant en outre une deuxième interface sans fil, ledit procédé comprenant les étapes suivantes mises en oeuvre par le dispositif passerelle :
- identification (E1) d'au moins un dispositif, dit dispositif relais, accessible au moyen de la deuxième interface et apte à jouer un rôle de relais pour acheminer des paquets échangés entre une entité cliente et le réseau de communication ;
- réception (E11) en provenance de ladite entité cliente d'un paquet de données indiquant qu'une session est initiée ;
- lorsqu'un critère de sélection d'acheminement est vérifié, acheminement (E17) des paquets relatifs à ladite session au moyen de la deuxième interface par l'intermédiaire du dispositif relais ;
- lorsque ledit critère de sélection n'est pas vérifié, acheminement des paquets relatifs à la session au moyen de l'interface nominale.

2. Procédé d'acheminement selon la revendication 1, dans lequel le critère de sélection appartient au groupe comprenant au moins un critère temporel, un critère de charge, un critère relatif à un service auquel la session est associée.

3. Procédé d'acheminement selon la revendication 1, comprenant une obtention (E3) d'un débit mis à disposition du dispositif passerelle par le dispositif relais identifié.

4. Procédé d'acheminement selon la revendication 3, comprenant une négociation relative à une utilisation du dispositif relais pour acheminer des paquets dans la limite du débit mis à disposition.

5. Procédé d'acheminement selon la revendication 3, dans lequel, le dispositif passerelle, mémorisant un débit courant acheminé par l'intermédiaire du dispositif relais, achemine les paquets relatifs à ladite session au moyen de l'interface nominale lorsqu'un débit disponible pour un acheminement par l'intermédiaire du dispositif relais ne permet pas d'acheminer les paquets relatifs à la session.

6. Dispositif passerelle (11), agencé pour acheminer des paquets de données reçus d'une entité cliente (20, 21) d'un réseau local (4) vers un réseau de communication (1) au moyen d'une interface nominale (100) et réciproquement, comprenant en outre ;
- au moins une deuxième interface sans fil (102) ;
- un module d'identification (106) d'au moins un dispositif, dit dispositif relais, accessible au moyen de la deuxième interface et apte à jouer un rôle de relais pour acheminer des paquets échangés entre une entité cliente et le réseau de communication ;
- un module de réception (104), agencé pour recevoir en provenance de ladite entité cliente un paquet de données indiquant qu'une session est initiée ;
- un module d'acheminement (108) des paquets relatifs à ladite session, agencé pour acheminer les paquets au moyen de la deuxième interface par l'intermédiaire du dispositif relais lorsqu'un critère de sélection d'acheminement est vérifié et pour acheminer les paquets au moyen de l'interface nominale lorsque ledit critère de sélection n'est pas vérifié.

7. Système d'acheminement (5) de paquets de données entre des entités clientes d'un réseau local (4) et un réseau de communication (1), ledit système comprenant un dispositif passerelle (11) selon la revendication 6 et au moins un dispositif (10, 30), agencé pour jouer un rôle de dispositif relais dans l'acheminement des paquets entre les entités clientes et le réseau de communication.

8. Programme pour un dispositif passerelle, comprenant des instructions de code de programme destinées à commander l'exécution des étapes du procédé selon l'une des revendications 1 à 5, lorsque ledit programme est exécuté par ledit dispositif passerelle.

9. Support d'enregistrement lisible par un dispositif passerelle sur lequel est enregistré le programme selon la revendication 8.

## Patentansprüche

1. Verfahren zur Weiterleitung von Datenpaketen durch eine Gateway-Vorrichtung (11), wobei die Gateway-Vorrichtung von einer Client-Entität (20, 21) eines lokalen Netzwerks (4) empfangene Pakete zu einem Kommunikationsnetzwerk (1) mittels einer Nennschnittstelle und umgekehrt weiterleiten kann, wobei die Gateway-Vorrichtung außerdem eine zweite drahtlose Schnittstelle enthält, wobei das Verfahren die folgenden Schritte enthält, die von der Gateway-Vorrichtung durchgeführt werden:
- Erkennung (E1) mindestens einer Vorrichtung, Relais-Vorrichtung genannt, die mittels der zweiten Schnittstelle zugänglich ist und die Aufgabe eines Relais übernehmen kann, um zwischen einer Client-Entität und dem Kommunikationsnetzwerk ausgetauschte Pakete weiterzuleiten;
- Empfang (E11) von der Client-Entität kommend eines Datenpakets, das anzeigt, dass eine Sitzung gestartet wird;
- wenn ein Weiterleitungs-Auswahlkriterium bestätigt wird, Weiterleitung (E17) der Pakete bezüglich der Sitzung mittels der zweiten Schnittstelle über die Relais-Vorrichtung;
- wenn das Auswahlkriterium nicht bestätigt wird, Weiterleitung der Pakete bezüglich der Sitzung mittels der Nennschnittstelle.

2. Weiterleitungsverfahren nach Anspruch 1, wobei das Auswahlkriterium zu der Gruppe gehört, die mindestens ein zeitliches Kriterium, ein Lastkriterium, ein Kriterium bezüglich eines Diensts enthält, dem die Sitzung zugeordnet ist.

3. Weiterleitungsverfahren nach Anspruch 1, das einen Erhalt (E3) einer Übertragungsrate enthält, die der Gateway-Vorrichtung von der erkannten Relais-Vorrichtung zur Verfügung gestellt wird.

4. Weiterleitungsverfahren nach Anspruch 3, das eine Aushandlung bezüglich einer Verwendung der Relais-Vorrichtung zum Weiterleiten der Pakete in den Grenzen der zur Verfügung gestellten Übertragungsrate enthält.

5. Weiterleitungsverfahren nach Anspruch 3, wobei die Gateway-Vorrichtung, die eine laufende Übertragungsrate speichert, die mittels der Relais-Vorrichtung weitergeleitet wird, die Pakete bezüglich der Sitzung mittels der Nennschnittstelle weiterleitet, wenn eine verfügbare Übertragungsrate für eine Weiterleitung mittels der Relais-Vorrichtung es nicht erlaubt, die Pakete bezüglich der Sitzung weiterzuleiten.

6. Gateway-Vorrichtung (11), die eingerichtet ist, um von einer Client-Entität (20, 21) eines lokalen Netzwerks (4) empfangene Datenpakete zu einem Kommunikationsnetzwerk (1) mittels einer Nennschnittstelle (100) und umgekehrt weiterzuleiten, die außerdem enthält:
- mindestens eine zweite drahtlose Schnittstelle (102) ;
- ein Erkennungsmodul (106) mindestens einer Vorrichtung, Relais-Vorrichtung genannt, die mittels der zweiten Schnittstelle zugänglich ist und eine Relaisaufgabe übernehmen kann, um Pakete weiterzuleiten, die zwischen einer Client-Entität und dem Kommunikationsnetzwerk ausgetauscht werden;
- ein Empfangsmodul (104), das eingerichtet ist, um von der Client-Entität kommend ein Datenpaket zu empfangen, das anzeigt, dass eine Sitzung gestartet wird;
- ein Weiterleitungsmodul (108) der Pakete bezüglich der Sitzung, das eingerichtet ist, um die Pakete mittels der zweiten Schnittstelle über die Relais-Vorrichtung weiterzuleiten, wenn ein Weiterleitungs-Auswahlkriterium bestätigt wird, und um die Pakete mittels der Nennschnittstelle weiterzuleiten, wenn das Auswahlkriterium nicht bestätigt wird.

7. Weiterleitungssystem (5) von Datenpaketen zwischen Client-Entitäten eines lokalen Netzwerks (4) und einem Kommunikationsnetzwerk (1), wobei das System eine Gateway-Vorrichtung (11) nach Anspruch 6 und mindestens eine Vorrichtung (10, 30) enthält, die eingerichtet ist, um die Aufgabe einer Relais-Vorrichtung bei der Weiterleitung der Pakete zwischen den Client-Entitäten und dem Kommunikationsnetzwerk zu übernehmen.

8. Programm für eine Gateway-Vorrichtung, das Programmcodeanweisungen enthält, die dazu bestimmt sind, die Ausführung der Schritte des Verfahrens nach einem der Ansprüche 1 bis 5 zu steuern, wenn das Programm von der Gateway-Vorrichtung ausgeführt wird.

9. Aufzeichnungsträger, der von einer Gateway-Vorrichtung lesbar ist, auf dem das Programm nach Anspruch 8 gespeichert ist.

## Claims

1. Method for forwarding data packets through a gateway device (11), the gateway device being capable of forwarding packets received from a client entity (20, 21) in a local area network (4) to a communication network (1) by means of a nominal interface and vice versa, the gateway device moreover comprising a second wireless interface, said method comprising the following steps implemented by the gateway device:
- identification (E1) of at least one device, called a relay device, that is accessible by means of the second interface and capable of playing a relay role in order to forward packets exchanged between a client entity and the communication network;
- reception (E11), from said client entity, of a data packet indicating that a session is initiated;
- when a forwarding selection criterion is verified, forwarding (E17) of the packets relating to said session by means of the second interface using the relay device;
- when said selection criterion is not verified, forwarding of the packets relating to the session by means of the nominal interface.

2. Forwarding method according to Claim 1, in which the selection criterion belongs to the group comprising at least one temporal criterion, a load criterion, a criterion relating to a service with which the session is associated.

3. Forwarding method according to Claim 1, comprising obtainment (E3) of a bit rate provided for the gateway device by the identified relay device.

4. Forwarding method according to Claim 3, comprising negotiation relating to use of the relay device in order to forward packets within the limits of the bit rate provided.

5. Forwarding method according to Claim 3, in which the gateway device, storing a current bit rate forwarded using the relay device, forwards the packets relating to said session by means of the nominal interface when a bit rate that is available for forwarding using the relay device does not allow the packets relating to the session to be forwarded.

6. Gateway device (11), which is designed to forward data packets received from a client entity (20, 21) in a local area network (4) to a communication network (1) by means of a nominal interface (100) and vice versa, moreover comprising:
- at least one second wireless interface (102);
- an identification module (106) for identifying at least one device, called a relay device, that is accessible by means of the second interface and capable of playing a relay role in order to forward packets exchanged between a client entity and the communication network;
- a reception module (104), designed to receive from said client entity a data packet indicating that a session is initiated;
- a forwarding module (108) for forwarding the packets relating to said session, which is designed to forward the packets by means of the second interface using the relay device when a forwarding selection criterion is verified and to forward the packets by means of the nominal interface when said selection criterion is not verified.

7. Forwarding system (5) for forwarding data packets between client entities in a local area network (4) and a communication network (1), said system comprising a gateway device (11) according to Claim 6 and at least one device (10, 30), designed to play a relay device role in the forwarding of the packets between the client entities and the communication network.

8. Program for a gateway device, comprising program code instructions that are intended to control the execution of the steps of the method according to one of Claims 1 to 5 when said program is executed by said gateway device.

9. Recording medium that can be read by a gateway device on which the program according to Claim 8 is recorded.
